# EUROPEAN PATENT APPLICATION

(11) **EP 2 796 990 A2**
(43) Date of publication of application: **29.10.2014**
(21) Application number: 14165438.4
(22) Date of filing: 22.04.2014
(51) Int. Cl.: G06F 9/38

(54) **Apparatus and method for supporting multi-modes of processor**

(30) Priority: 22.04.2013 KR 20130044429
(71) Applicant: Samsung Electronics Co., Ltd, Gyeonggi-do 443-742 (KR)
(72) Inventor: Chung, Moo-Kyoung, Gyeonggi-do (KR); Ryu, Soo-Jung, Gyeonggi-do (KR); Cho, Yeon-Gon, Gyeonggi-do (KR)
(74) Representative: Grünecker, Kinkeldey, Stockmair & Schwanhäusser

(57) **Abstract**

An apparatus and method for supporting a multi-mode. The apparatus for supporting a multi-mode may include an instruction distributor configured to select, according to a current execution mode, at least one instruction from among a plurality of received instructions that each include an operand and an opcode, and transfer the opcode included in each of at least one selected instruction to the plurality of functional units; an operand switch controller configured to generate, based on the operand included in each of the selected at least one instruction, switch configuration information for routing in order to execute the selected at least one instruction; and an operand switch configured to route, based on the switch configuration information, a functional unit output or a register file output to either a functional unit input or a register file input.

## Description

### Field

The following description relates to an apparatus and method for supporting a multi-mode of a processor.

### Description of the Related Art

A Very Long Instruction Word (VLIW) processor including multiple functional units (FUs) processes a long instruction word composed of multiple instructions within a single clock cycle. A Coarse Grain Reconfigurable Array (CGRA) processor is hardware that is also capable of processing a long instruction word composed of multiple instructions within a single cycle, and includes more functional units than the VLIW processor, which are directly connected to one another in the form of an array for use in executing an operation at a high speed.

The CGRA and VLIW processors can process a long instruction word even if data dependency exists. However, all the scheduling of data processing is performed in a compile stage, which increases a compile time, and may degrade the utilization of the functional units.

A Single Instruction Multiple Thread (SIMT) processor is in an architecture that has multiple functional units, and uses a single instruction by the multiple functional units, each of which executes an individual thread. That is, the SIMT processor allows the multiple functional units to separately process a great amount of data (or threads) in the same instruction sequence.

The SIMT provides benefits to a massive parallel data processing application that needs to process a great amount of data in the same process, but the data processing is difficult when data dependency is present.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

According to an aspect of an exemplary embodiment, there is provided an apparatus for supporting a multi-mode of a processor that comprises a register file and a plurality of functional units, the apparatus including: an instruction distributor configured to select, according to a current execution mode, at least one instruction from among a plurality of received instructions that each include an operand and an opcode, and transfer the opcode included in each of at least one selected instruction to the plurality of functional units; an operand switch controller configured to generate, based on the operand included in each of the selected at least one instruction, switch configuration information for routing in order to execute the selected at least one instruction; and an operand switch configured to route, based on the switch configuration information, a functional unit output or a register file output to either a functional unit input or a register file input.

The instruction distributor may be further configured to, in response to the current execution mode being a Single Instruction Multiple Thread (SIMT) mode, elect one instruction from among the plurality of received instructions based on program counter information, transfer the operand included in the selected instruction to all input ports of the operand switch controller, and transfer the opcode included in the selected instruction to all the functional units.

The instruction distributor may be further configured to, in response to the current execution mode being a Very Long Instruction Word (VLIW)/Coarse Grain Reconfigurable Array (CGRA) mode and at least two instruction being selected, transfer a different operand to each input port of the operand switch controller based on the operands and the opcodes included in the selected at least two instructions, and transfer a different opcode to each functional unit.

The instruction distributor may be configured to, in response to the current execution mode being integrated mode, select some instructions from among the plurality of received instructions, transfer a same operand to a first group of input ports of the operand switch controller, transfer different operands to each input port of a second group of input ports of the operand switch controller, transfer a same opcode to a first group of functional units, and transfer different opcodes to each functional unit of a second group of functional units.

The operand switch controller may be configured to convert a logical address of an operand into a physical address.

The operand switch may be configured to route a register file output to a register file input, a register file output to a functional unit input, a functional unit output to a register file input, or an output of one functional unit to an input of another functional unit.

The operand switch may include at least one switch stage.

The switch configuration information may include at least one piece of switch stage configuration information corresponding to the at least one switch stage.

Each piece of the switch stage configuration information is sequentially input to a corresponding switch stage in a pipeline manner.
According to an aspect of another exemplary embodiment, there is provided a method of supporting multi-mode of a processor that includes a register file and a plurality of functional units, the method including: selecting, according to a current execution mode, at least one instruction from among a plurality of received instructions that each include an operand and an opcode; transferring the opcode included in each of the selected at least one instruction to the plurality of functional units; generating, based on the operand included in each of the selected at least one instruction, switch configuration information for routing in order to execute the selected at least one instruction; and routing, based on the switch configuration information, a functional unit output or a register file output to either a functional unit input or a register file input.

In response to the current execution mode being a Single Instruction Multiple Thread (SIMT) mode, the selecting of the one or more instructions may include selecting one instruction from among the plurality of received instructions based on program counter information, and the transferring of the opcode comprises transferring the opcode included in the selected instruction to all the functional units.

In response to the current execution mode being a Very Long Instruction Word (VLIW)/Coarse Grain Reconfigurable Array (CGRA) mode, the selecting of the at least one instruction comprises selecting one instruction from among the plurality of received instructions based on program counter information, and the transferring of the opcode comprises transferring the opcode included in the selected at least one instruction to all the functional units.

In response to the current execution mode being integrated mode, the selecting of the at least one instruction comprises selecting some instructions from among the plurality of received instructions, and the transferring of the opcode comprises transferring a different opcode to each one of a first group of functional units and a same opcode to each one of a second group of functional units.

The generating of the switch configuration information may include converting a logical address of an operand included in each of the selected at least one instruction to a physical address, and generating the switch configuration information based on the physical address.According to an aspect of another exemplary embodiment, there is provided an apparatus for supporting a multi-mode processor that includes a register file and a plurality of functional units. The apparatus may include an operand switch controller configured to receive a mode selection signal for selecting a mode of the multi-mode processor, to receive, according to the mode selection signal, at least one operand corresponding to at least one selected instruction, and to generate switch configuration information for routing between the register file and the plurality of functional units based on the at least one selected operand received by the operand switch controller; and an operand switch configured to route, based on the switch configuration information, an output of a first functional unit or an output of the register file to either an input of a second functional unit or an input of the register file.

The apparatus may further include an instruction distributor configured to receive the mode selection signal and to output, according to the mode selection signal, a same opcode to all of the functional units, different opcodes to all of the functional units, or a same opcode to a first group of the functional units and different opcodes to each functional unit of a second group of functional units.

In response to the mode selection signal corresponding to a Single Instruction Multiple Thread (SIMT) mode, the instruction distributor may output the same opcode to all of the functional units, in response to the mode selection signal corresponding to a Very Long Instruction Word (VLIW)/Coarse Grain Reconfigurable Array (CGRA) mode, the instruction distributor may output different opcodes to all of the functional units, and in response to the mode selection signal corresponding to an integrated mode, the instruction distributor may output the same opcode to the first group of the functional units and different opcodes to each functional unit of the second group of functional units.

According to an aspect of another exemplary embodiment, there is provided a multi-mode processor that may include an instruction distributor configured to receive a mode selection signal for selecting a mode of the multi-mode processor, to receive multiple instructions that each include an operand and an opcode, and to output, based on the mode selection signal, at least one opcode and at least one operand; an operand switch controller configured to receive the mode selection signal for selecting a mode of the multi-mode processor, and the at least one operand output by the instruction distributor; and an operand switch configured to control, using switch configuration information from the operand switch controller, a plurality of functional units that receive the at least one opcode output by the instruction distributor.

Based on the mode selection signal, the operand switch may control the plurality of functional units to all perform as a Single Instruction Multiple Thread (SIMT) processor, to all perform as a Very Long Instruction Word (VLIW)/Coarse Grain Reconfigurable Array (CGRA) processor, or so that some of the plurality of functional units perform as a SIMT processor and the remaining functional units perform as a VLIW/CGRA processor.

Other features and aspects will be apparent from the following detailed description, the drawings, and the claims.

### BRIEF DESCRIPTION OF THE DRAWINGS

The above and/or other aspects will be more apparent by describing certain exemplary embodiments with reference to the accompanying drawings, in which:
FIG. 1 is a diagram illustrating an apparatus for supporting multi-mode according to an exemplary embodiment;
FIG. 2 is a diagram illustrating in detail the instruction distributor of FIG. 1;
FIG. 3 is a diagram illustrating an example of an operand switch of FIG. 1;
FIG. 4A is a diagram illustrating an example of switch configuration information according to an exemplary embodiment;
FIG. 4B is a diagram for explaining the order of inputting the switch stage configuration information to switch stages; and
FIG. 5 is a flowchart illustrating a method of supporting multi-mode according to an exemplary embodiment.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

Throughout the drawings and the detailed description, unless otherwise described, the same drawing reference numerals will be understood to refer to the same elements, features, and structures. The relative size and depiction of these elements may be exaggerated for clarity, illustration, and convenience.

The description below is describes a processor that is capable of switching between different modes based on the processing and performance needs of the processor. More specifically, the processor supports, for example, (i) a Single Instruction Multiple Thread (SIMT) mode for massive data processing, (ii) a Very Long Instruction Word (VLIW) mode or Coarse Grain Reconfigurable Array (CGRA) mode for an enhanced performance from utilization of software pipelining, and (iii) an integrated mode in which a portion of the processor functions in the SIMT mode and a portion of the processor functions in the VLIW/CGRA mode.

Prior to describing the exemplary embodiments, an overview of the of SIMT mode, VLIW/CGRA mode, and integrated mode will be given.

### [SIMT Mode]

In SIMT mode, the functional units in the system use the same instruction, have access to different physical address spaces, and receive the same opcode. Operands transferred to an operand switch controller in the system are the same and therefore have the same logical address space. However, these operands have different physical address spaces. The register file is divided into the same number of segments as the number of working functional units so that a different register segment can be allocated to each working functional unit for use as a local register of the functional unit. The operand switch controller converts logical addresses of the received operands into physical addresses so that each functional unit can access a local register corresponding to an operand related to an opcode received by that functional unit, and generates switch configuration information based on the converted address.

### [VLIW/CGRA Mode]

In VLIW/CGRA mode, the functional units use different instructions, have access to the same physical address space, and receive a different opcode. Operands transferred to the operation switch controller are different, but have the same logical address space which causes the functional units to access the same target. Since the functional units use different instructions, operands corresponding to opcodes received by the functional units are different from one another, and each operand has the same logical address space as the physical address space.

VLIW processor is different from CGRA processor in the following respects. A CGRA processor includes more functional units than a VLIW processor, has a local register file, and a network is available in which data can be directly transmitted between functional units without passing a central register file. A VLIW processor needs a greater register file bandwidth because all of the functional units access a central register file. If access to the central register file is restricted (e.g., a particular functional unit is allowed to access a specific register file subset only) the parallel processing performance may decrease due to a reduced efficiency of use of the functional units caused by, for example, data transfer between register files. The CGRA processor/mode can avoid these issues by using a connection between functional units and a local register between functional units. That is, since data can be transmitted between functional units without passing the central register file, more instructions are available for parallel processing, thereby increasing efficiency.

### [Integrated Mode]

The integrated mode combines both SIMT mode and VLIW/CGRA mode. In integrated mode, a first group of functional units receives the same opcode and a second group of functional units each receive different opcodes. The operands corresponding to SIMT mode have a logical address space that is different from the physical address space, whereas the operands corresponding to VLIW/CGRA mode have logical address space that is the same as physical address space.

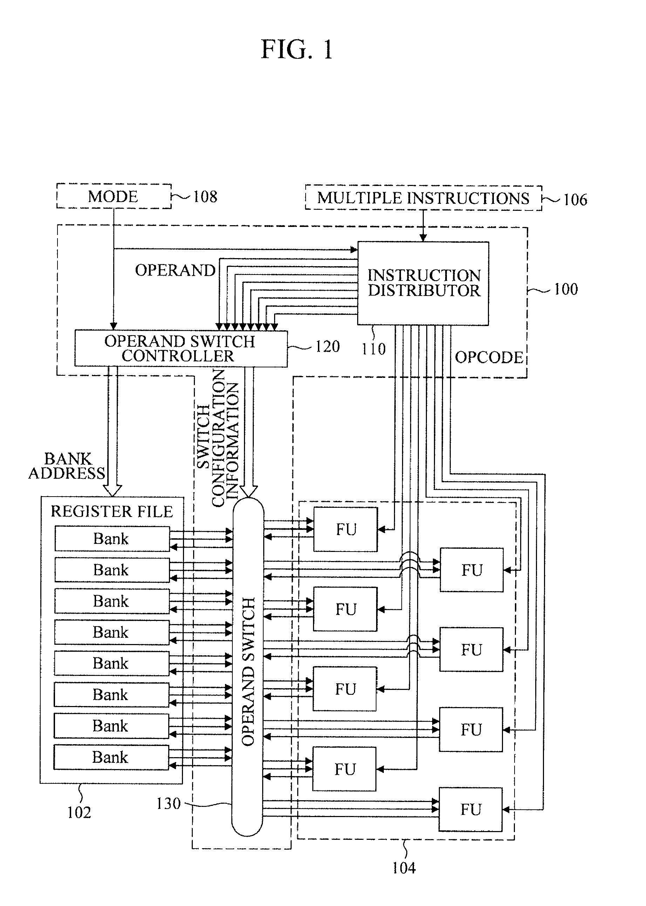

FIG. 1 is a diagram illustrating an apparatus 100 for supporting the above-mentioned multi-mode processing according to an exemplary embodiment.

An example of the apparatus 100 shown in FIG. 1 includes a register file 102, and eight functional units (FUs) 104, however the number of functional units 104 may vary depending on system performance or the purpose of use.

Referring to FIG. 1, the apparatus 100 for supporting multi-mode processing may include an instruction distributor 110, an operand switch controller 120, and an operand switch 130.

The instruction distributor 110 may receive a plurality of instructions 106. The instructions may be machine instructions that each include an operand and an operation code (opcode). An operand may be considered to be a portion of the selected code that specifies what data is to be manipulated or operated on. An opcode may be considered to be a portion of the selected instruction that specifies the operation to be performed. The instruction distributor 110 selects one or more of the received instructions 106 according to the current mode, transfers the operand contained in the selected instruction to the operand switch controller 120, and transfers the opcode contained in the selected instruction to the FUs 104.

The current mode is determined before the hardware starts working. Specifically, the instructions when operating in SIMT mode differ from the instructions when operating in VLIW/CGRA mode, and thus the execution mode is already determined when a compiler creates the machine code. The execution mode may be determined by a programmer first determining the mode and then notifying the compiler of the mode to the compiler, or the compiler may analyze a program, determine which mode is more efficient, and compile the code based on the determined mode. Once the execution mode is determined and the code is compiled, the compiler instructs the processor to use the proper processing mode. In one or more exemplary embodiments, there be a separate instruction for mode switching that may be inserted into a compiled code. The processor hardware may read this inserted instruction in order to determine the mode.

In the SIMT mode, the instruction distributor 110 selects one of the received instructions 106 based on program counter (PC) information, transfers an operand contained in the selected instruction to all input ports of the operand switch controller 120, and transfers an opcode contained in the selected instruction to all FUs 104. In other words, in an SIMT mode, the instruction distributor 110 transfers the same operand to all of the input ports of the operand switch controller 120 and to all of the FUs 104.

In the VLIW/CGRA mode, the instruction distributor 110 selects more than one of the received instructions 106, transfers a different operand to each input port of the operand switch controller 120, and transfers a different opcode to each of the FUs 104, based on operands and opcodes contained in the received instructions 106.

The integrated mode combines both SIMT mode and VLIW/CGRA mode. In the integrated mode, the instruction distributor 110 selects some instructions from among the received instructions 106, distributes the operand contained in one of the selected instructions to a first group of input ports of the operand switch controller 120, and distributes the opcode contained in the one selected instructions to a corresponding first group of FUs 104. The instruction distributor 110 distributes operands contained in other ones of the selected instructions to a second group of input ports of the operand switch controller 120, and distributes opcodes contained in the other ones of the selected instructions to a corresponding second group of FUs 104. That is, in integrated mode, the instruction distributor 110 may transfer the same operand to the first group of input ports of the operand switch controller 120, transfer different operands to each of the remaining input ports (*i.e.,* a second group of input ports), while transferring the same opcode to the first group of FUs, and transferring different opcodes to each of the remaining FUs (*i.e.,* a second group of FUs that correspond to the second group of input ports), based on operands and opcodes contained in some instructions that are selected from among the received instructions. In this case, the number of input ports of the operand switch controller 120 (or the number of the functional units 104) that receive the same operand (or the same opcode) may vary depending on the purpose of use, or the system performance.

In the integrated mode the utilization rate of the functional units in the SIMT mode and the functional units in the VLIW/CGRA mode is dependent on the particular application. Preferably, the first group of functional units 104 is grouped geographically next to one another and the second group of functional units 104 is grouped geographically next to one another.

The operand switch controller 120 receives the operands from the instruction distributor 110, converts logical addresses of the operands into physical addresses to allow the functional units or registers to access desired functional units or registers using the received operands, and generates switch configuration information SC of the operand switch 130. The operand switch controller 120 may receive a mode signal 108 from an external source to distinguish among the SIMT mode, the VLIW/CGRA mode, and the integrated mode.

In SIMT mode, since all functional units 104 use the same instruction, the operands transferred to the input ports of the operand switch controller 120 are all the same. Hence, the operands transferred to the input ports have the same logical address space. However, since a register file is divided for use by each functional unit (or thread), the operands transferred to the input ports of the operand switch controller 120 have different physical address spaces, and the functional units 104 are allowed to have access to registers at different physical address spaces. More specifically, the entire register file 102 is divided into the same number of segments as the number of working functional units 104 (or threads), and a different register segment is allocated to each working functional unit 104 (or each thread) for use as a local register of the functional unit (or thread). In this case, the operand switch controller 120 may receive one operand, convert logical addresses of operands corresponding to the respective functional units into physical addresses to allow each functional unit 104 to access a local register corresponding to an operand related to an opcode received by that functional unit 104, and generate switch configuration information SC based on the converted address.

In VLIW/CGRA mode, since all functional units 104 use different instructions, operands transferred to the input ports of the operand switch controller 120 are different from one another, and the operands have the same logical address space, and the same physical address space as one another. Accordingly, each functional unit 104 may be free to have an operand, and the operand switch controller 120 may receive an individual operand, and generate switch configuration information SC to allow each functional unit 104 to have access to a relevant target. In this case, due to the same address space being used, the same operand causes the functional units to access the same target.

In integrated mode, operands that correspond to the SIMT mode have different logical address spaces and different physical address spaces, whereas operands that correspond to the VLIW/CGRA mode have the same logical address space and the same physical address space. Thus, the operand switch controller 120 combines the SIMT mode and the VLIW/CGRA mode, and serves functions according to the combined mode.

The operand switch controller 120 may convert a logical address of an operand into a physical address, and generate switch configuration information SC based on the converted physical address. Based on the switch configuration information SC: in the SIMT mode, all of the functional units 104 are allowed to access their targets with the same logical address space (the same logical address space, but different physical address spaces); in the VLIW/CGRA mode, all of the functional units are allowed to access their targets with individual logical address spaces; and in integrated mode, only some functional units are allowed to access their targets with some logical address spaces.

The operand switch 130 may route among the functional units 104 and registers to allow for the execution of the instruction selected by the instruction distributor 110, based on the switch configuration information SC generated by the operand switch controller 120. For example, based on the switch configuration information SC, the operand switch 130 may route a register file output to an FU input, route an FU output to a register file input, route an output of one FU to an input of another FU, or route an output of one register file to an input of another register file.

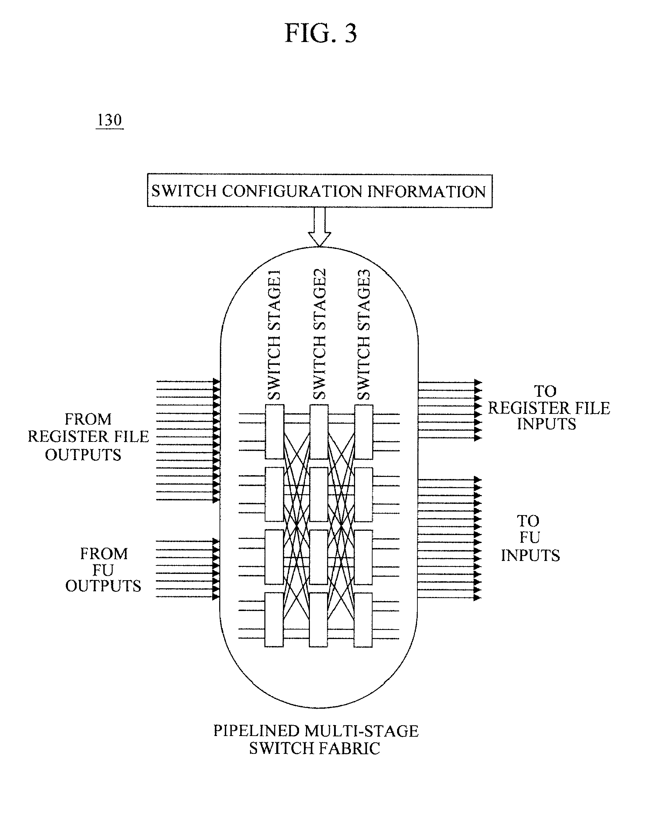

In one exemplary embodiment, the operand switch 130 may consist of multiple switch stages, and each switch stage may include a storage device, such as a flip-flop. This will be described later in detail with reference to FIG. 3.

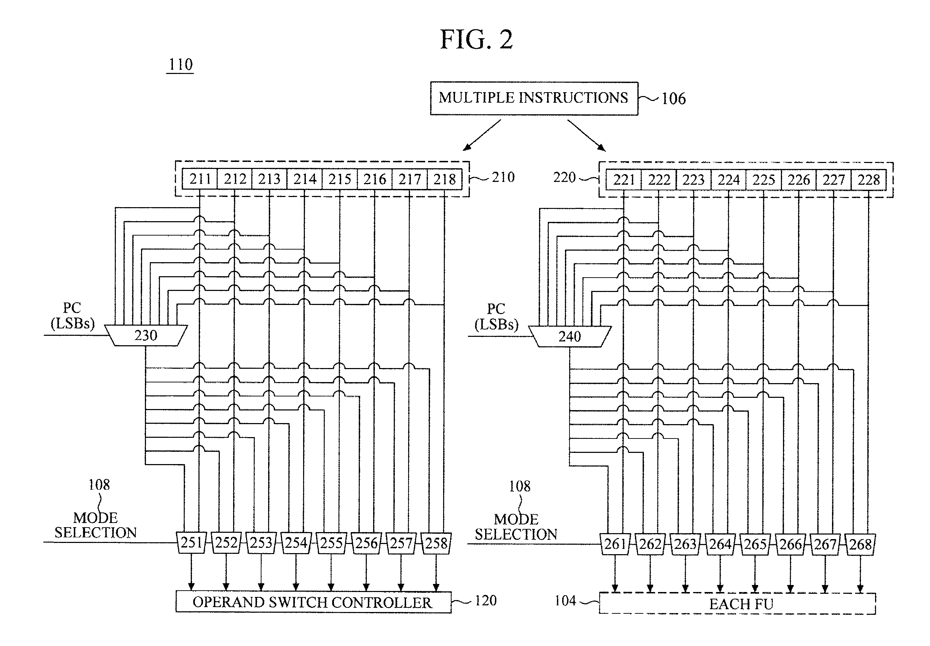

FIG. 2 is a diagram illustrating in detail the instruction distributor 110 of FIG. 1. In the exemplary embodiment illustrated in FIG. 2, the operand switch controller 120 has 8 input ports, 8 functional units are provided to execute an operation, and one instruction includes one operand and one opcode.

Referring to FIG. 2, the instruction distributor 110 may include 16 2*1 multiplexers 251, 252, 253, 254, 255, 256, 257, 258, 261, 262, 263, 264, 265, 266, 267, and 268 and two 8*1 multiplexers 230 and 240. The instruction distributor 110 receives 8 instructions, and generates operand set 210 and opcode set 220, which, respectively, include operands and opcodes separated from the 8 instructions. The 8 operands 211, 212, 213, 214, 215, 216, 217, and 218 belonging to the operand set 210 are transferred to inputs of the respective 8 2*1 multiplexers 251 through 258 connected to the respective input ports of the operand switch controller 120, and are also transferred to inputs of the 8*1 multiplexer 230. The 8*1 multiplexer 230 receives the 8 operands 211 through 218, selects an operand with respect to a particular instruction, based on PC information, and transfers the selected operand to the inputs of the 8 2*1 multiplexers 251 through 258. Each of the 8 2*1 multiplexers 251 through 258 determines an output according to a set execution mode 108, and transfers the determined output to a corresponding input port of the operand switch controller 120.

In addition, the 8 opcodes 221 through 228 belonging to the opcode set 220 are transferred to inputs of the 8 2*1 multiplexers 261 through 268 connected to the respective 8 functional units 104, and are also transferred to the inputs of the 8*1 multiplexer 240. The 8*1 multiplexer 240 receives the 8 opcodes 221 through 228, and transfers a particular opcode to the 8 2*1 multiplexers 261 through 268 based on PC information. Each of the 8 2*1 multiplexers 261 through 268 determines an output according to the set execution mode 108, and transfers the determined output to the corresponding functional unit 104.

In SMIT mode, each of the 2*1 multiplexers 251 through 258 determines the operand input from the 8*1 multiplexer 230 as an output, and transfers the output to the corresponding input port among the 8 input ports of the operand switch controller 120. In addition, each of the 2*1 multiplexers 261 through 268 determines the opcode input from the 8*1 multiplexer 240 as an output, and transfers the output to the corresponding functional unit. That is, the eight input ports of the operand switch controller 120 receive the same operand and the functional units 104 receive the same opcode.

In VLIW/CGRA mode, each of the 2*1 multiplexer 251 through 258 determines an operand directly received from the operand set 210 as an output, and transfers the output to the corresponding input port among the eight [doesn't matter which one but needs to be consistent throughout] input ports of the operand switch controller 120. Moreover, each of the 2*1 multiplexers 261 through 268 determines an opcode directly input from the opcode set 220 as an output, and transfers the output to the corresponding functional unit 104. Thus, a different operand is transferred to each of the 8 input ports of the operand switch controller 120, and a different opcode is transferred to each functional unit 104.

In integrated mode, some among the 2*1 multiplexers 251 through 258 determine the operand directly input from the operand set 210 as their outputs, and the rest of the 2*1 multiplexers determine the operands input from the 8*1 1 multiplexers as their outputs. The determined outputs are transferred to the respective eight input ports of the operand switch controller 120. In addition, some among the 2*1 multiplexers 261 through 268 determine the opcode directly input from the opcode set 220 and the rest of the 2*1 multiplexers determine the opcodes input from the 8*1 multiplexers 240 as their outputs. The determined outputs are transferred to the respective functional units. That is, different operands are transferred to some of the eight input ports of the operand switch controller 120 and the same operand is transferred to the remaining input ports of the operand switch controller 120. In the same manner, different opcodes are transferred to some of the eight functional units, and the same opcode is transferred to the remaining functional units.

In addition, the number of 2*1 multiplexers that determines the operand directly input from the operand set 210 as their outputs, and the number of 2*1 multiplexers that determines the opcode directly input from the opcode set 220 as their outputs, may vary depending on the system performance or purpose of use.

FIG. 3 is a diagram illustrating an example of an operand switch 130 of FIG. 1.

In FIG. 3, the operand switch 130 consists of three switch stages, but the aspects of the disclosure are not limited thereto, such that the number of switch stages constituting the switch may vary depending on the system performance or the purpose of use.

Referring to FIG. 3, the operand switch 130 may include switch stage 1, switch stage 2, and switch stage 3. Each of the switch stages may include a storage device, such as a flip-flop.

Based on the switch configuration information SC, the operand switch 130 may route an output of one register file to an input of another register file, a register file output to an FU input, an FU output to a register file input, or an output of one FU to an input of another FU.

In a case where the operand switch 130 routes an FU output to an FU input, it is possible to establish a connection between functional units without the help of the register file, and accordingly, the operand switch 130 can be utilized to minimize data transfer overhead between operations in VLIW/CGRA mode. In addition, in a case where the operand switch 130 routes an output of one register file to an input of another register file, it is possible to execute a "move" operation without the help of a functional unit 104, and thus the operand switch 130 can be used to improve VLIW/CGRA performance.

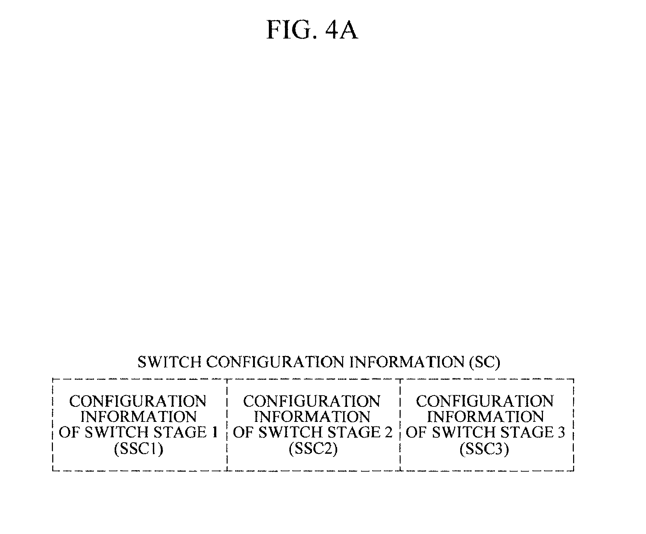

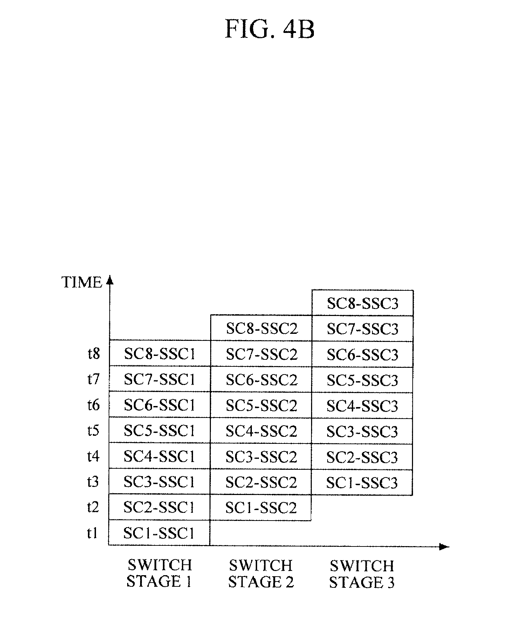

FIG. 4A is a diagram illustrating an example of switch configuration information SC according to an exemplary embodiment, and FIG. 4B is a diagram explaining the order of inputting the switch stage configuration information to switch stages. Examples shown in FIGS. 4A and 4B assume that the operand switch 130 consists of three switch stages, as the example of FIG. 3.

Referring to FIG. 4A, in a case of the operand switch 130 consisting of three switch stages, each switch configuration information SC may be separately generated, and in this case, switch configuration information SC may contain configuration information SSC1 of switch stage 1, configuration information SSC2 of switch stage 2, and configuration information SSC3 of switch stage 3.

Hereinafter, an exemplary method of inputting configuration information to each switch stage will be described with reference to FIGS. 3, 4A, and 4B.

Referring to FIG. 4B, at time t1, configuration information SC1-SSC1 of switch stage 1, which is contained in initial switch configuration information SC1 generated by the operand switch controller 120, is input to switch stage 1.

Thereafter, at time t2, configuration information SC2-SSC1 of switch stage 1, which is contained in the second switch configuration information SC2 generated by the operand switch controller 120, is input to switch stage 1, and at the same time, configuration information SC1-SSC2 of switch stage 2, which is contained in the initial switch configuration information SC1, is input to switch stage 2.

At time t3, configuration information SC3-SSC1 of switch stage 1, which is contained in the third switch configuration information SC3 generated by operand switch controller 120, is input to switch stage 1. At the same time, configuration information SC2-SSC2 of switch stage 2 contained in the second switch configuration information SC2 is input to switch stage 2, and configuration information SC1-SSC3 of switch stage 3, which is contained in the initial switch configuration information SC1, is input to switch stage 3.

As such, the sequential input of the switch stage configuration information SSC to each switch stage may be performed in a pipeline manner.

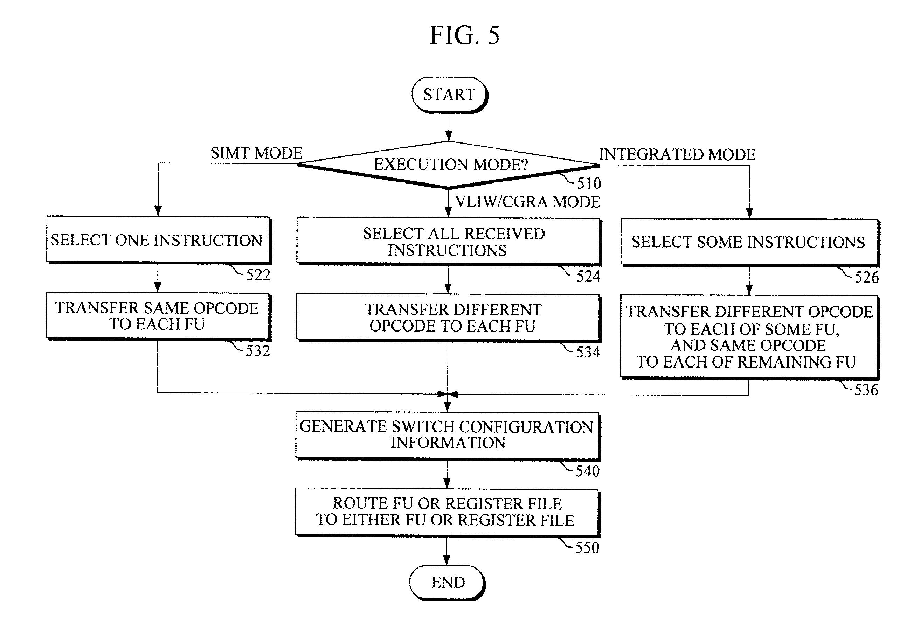

FIG. 5 is a flowchart illustrating a method of supporting multi-mode according to an exemplary embodiment.

Referring to FIG. 5, in 510, a type of a current execution mode is determined.

In response to determining that the current execution mode is SIMT mode, one instruction is selected from among a plurality of received instruction based on program counter information in 522. An opcode included in the selected instruction is transferred to each functional unit in 532. That is, in SIMT mode, the same opcode is transferred to all functional units.

In response to determining that the current execution mode is VLIW/CGRA mode, all the received instructions are selected in 524. Then, opcodes included in the selected instructions are transferred to individual functional units in 534, wherein the transferred opcodes are different from one another.

In response to a determination made in 510 that the current execution mode is integrated mode, some of the received instructions are selected in 526, different opcodes are transferred to some functional units and the same opcode is transferred to the remaining functional units in 536. In this case, the number of functional units to which the different opcodes are transferred may vary depending on the system performance or purpose of use.

Thereafter, to execute the instruction(s) selected in 522, 524 or 526, switch configuration information for routing is generated based on an operand included in each of the selected instruction(s) in 540.

For example, a logical address of a selected operand may be converted into a physical address, and the switch configuration information SC may be generated based on the converted address.

In SIMT mode, since all functional units use the same instruction, operands corresponding to the opcodes received by individual functional units have the same logical address space. However, since a register file is divided for use by each functional unit (or thread), operands corresponding to the opcodes received by individual functional units have different physical address spaces from one another. That is, the logical address space differs from the physical address space.

In VLIW/CGRA mode, since all functional units use different instructions, operands corresponding to opcodes received by the functional units are different from one another, and each operand has the same logical address space as the physical address space.

In integrated mode, some operands corresponding to SIMT mode have logical address space that is not the same as physical address space, whereas the remaining operands corresponding to VLIW/CGRA mode have logical address space that is the same as physical address space.

Therefore, in SIMT mode and integrated mode, a logical address space needs to be converted into a physical address space.

Then, in 550, based on the generated switch configuration information, a functional unit or a register file is routed to another functional unit or another register file such as to execute the instruction(s) selected in 522, 524, or 526.

The current exemplary embodiments can be implemented as computer readable codes in a computer readable record medium. Codes and code segments constituting the computer program can be easily inferred by a skilled computer programmer in the art. The computer readable record medium includes all types of record media in which computer readable data are stored. Examples of the computer readable record medium include a ROM, a RAM, a CD-ROM, a magnetic tape, a floppy disk, and optical data storage. Further, the record medium may be implemented in the form of a carrier wave such as Internet transmission. In addition, the computer readable record medium may be distributed to computer systems over a network, in which computer readable codes may be stored and executed in a distributed manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An apparatus for supporting a multi-mode of a processor that comprises a register file and a plurality of functional units, the apparatus comprising:
an instruction distributor configured to select, according to a current execution mode, at least one instruction from among a plurality of received instructions that each include an operand and an opcode, and transfer the opcode included in each of at least one selected instruction to the plurality of functional units;
an operand switch controller configured to generate, based on the operand included in each of the selected at least one instruction, switch configuration information for routing in order to execute the selected at least one instruction; and
an operand switch configured to route, based on the switch configuration information, a functional unit output or a register file output to either a functional unit input or a register file input.

2. The apparatus of claim 1, wherein the instruction distributor is further configured to, in response to the current execution mode being a Single Instruction Multiple Thread, SIMT, mode, select one instruction from among the plurality of received instructions based on program counter information, transfer the operand included in the selected instruction to all input ports of the operand switch controller, and transfer the opcode included in the selected instruction to all the functional units.

3. The apparatus of claim 1, wherein the instruction distributor is further configured to, in response to the current execution mode being a Very Long Instruction Word, VLIW/Coarse Grain Reconfigurable Array, CGRA, mode and at least two instruction being selected, transfer a different operand to each input port of the operand switch controller based on the operands and the opcodes included in the selected at least two instructions, and transfer a different opcode to each functional unit.

4. The apparatus of claim 1, wherein the instruction distributor is further configured to, in response to the current execution mode being integrated mode, select some instructions from among the plurality of received instructions, transfer a same operand to a first group of input ports of the operand switch controller, transfer different operands to each input port of a second group of input ports of the operand switch controller, transfer a same opcode to a first group of functional units, and transfer different opcodes to each functional unit of a second group of functional units.

5. The apparatus of one of claims 1 to 4, wherein the operand switch controller is further configured to convert a logical address of an operand into a physical address.

6. The apparatus of one of claims 1 to 5, wherein the operand switch is further configured to route:
a register file output to a register file input;
a register file output to a functional unit input;
a functional unit output to a register file input; or
an output of one functional unit to an input of another functional unit.

7. The apparatus of one of claims 1 to 6, wherein the operand switch comprises at least one switch stage.

8. The apparatus of claim 7, wherein the switch configuration information comprises at least one piece of switch stage configuration information corresponding to the at least one switch stage.

9. The apparatus of claim 8, wherein each piece of the switch stage configuration information is sequentially input to a corresponding switch stage in a pipeline manner.

10. The apparatus of one of claims 1 to 9, wherein the operand switch controller is further configured to converte a logical address of an operand included in each of the selected at least one instruction to a physical address, and to generate the switch configuration information based on the physical address.

11. A method of supporting a multi-mode processor that comprises a register file and a plurality of functional units, the method comprising:
receiving, by an operand switch controller, a mode selection signal for selecting a mode of the multi-mode processor, for receiving, according to the mode selection signal, at least one operand corresponding to at least one selected instruction, and for generating switch configuration information for routing between the register file and the plurality of functional units based on the at least one selected operand received by the operand switch controller; and
routing, by an operand switch, based on the switch configuration information, an output of a first functional unit or an output of the register file to either an input of a second functional unit or an input of the register file.

12. The method according to claim 11, further comprising the step of receiving, by an instruction distributor, the mode selection signal and for outputting, according to the mode selection signal, a same opcode to all of the functional units, different opcodes to all of the functional units, or a same opcode to a first group of the functional units and different opcodes to each functional unit of a second group of functional units.

13. The method according to claim 12, wherein in response to the mode selection signal corresponding to a Single Instruction Multiple Thread, SIMT, mode, the same opcode is output, by the instruction distributor, to all of the functional units,
in response to the mode selection signal corresponding to a Very Long Instruction Word, VLIW/Coarse Grain Reconfigurable Array, CGRA, mode, the instruction distributor outputs different opcodes are output, by the instruction distributor, to all of the functional units, and
in response to the mode selection signal corresponding to an integrated mode, the same opcode is output, by the instruction distributor, to the first group of the functional units and different opcodes to each functional unit of the second group of functional units.

14. A computer-readable medium having instructions to cause a multi-mode processor comprising an instruction distributor, an operand switch controller, and an operand switch to perform the steps of:
receiving, by said instruction distributor, a mode selection signal for selecting a mode of the multi-mode processor, for receiving multiple instructions that each include an operand and an opcode, and for outputting, based on the mode selection signal, at least one opcode and at least one operand;
receiving, by said operand switch controller, the mode selection signal for selecting a mode of the multi-mode processor, and the at least one operand output by the instruction distributor; and
controlling, by said operand switch, using switch configuration information from the operand switch controller, a plurality of functional units that receive the at least one opcode output by the instruction distributor.

15. The computer-readable medium according to claim 14, wherein, based on the mode selection signal, the operand switch controls the plurality of functional units to all perform as a Single Instruction Multiple Thread, SIMT, processor, to all perform as a Very Long Instruction Word, VLIW/Coarse Grain Reconfigurable Array, CGRA, processor, or so that some of the plurality of functional units perform as a SIMT processor and the remaining functional units perform as a VLIW/CGRA processor.
